# DEMANDE DE BREVET EUROPEEN

(11) **EP 4 406 673 A1**
(43) Date de publication de la demande: **31.07.2024**
(21) Numéro de dépôt: 24150113.9
(22) Date de dépôt: 02.01.2024
(51) Int. Cl.: B21D 1/12, B21D 1/14, B25B 11/00

(54) **DISPOSITIF DE REDRESSEMENT DE TOLE**

(30) Priorité: 25.01.2023 FR 2300682
(71) Demandeur: GYS, 53940 Saint-Berthevin (FR)
(72) Inventeur: BOUYGUES, Bruno, 75016 PARIS (FR); COIGNARD, Sébastien, 53810 Changé (FR)
(74) Mandataire: Vidon Brevets & Stratégie

(57) **Abrégé**

La divulgation concerne un dispositif (1) de tirage destiné à porter au moins un outil de tirage adapté pour redresser des tôles, ledit dispositif (1) comprenant :
- une platine (10), adaptée pour être fixée de manière amovible sur une surface de support (3),
- une colonne de tirage (2) configurée pour porter ledit outil de tirage, ladite colonne de tirage étant solidaire d'une première surface (11), dite surface supérieure, de ladite platine (10),
- des moyens d'étanchéité élastiques (4) s'étendant sur la périphérie d'une deuxième surface (12), dite surface inférieure, de ladite platine (10), lesdits moyens d'étanchéité élastiques (4) étant configurés, lors de l'utilisation dudit dispositif (1), pour être disposés entre la platine (10) et la surface de support (3) pour former un espace clos (5), et
- des moyens de génération de vide, en communication fluidique avec l'espace clos (5) au niveau d'un orifice (13) de ladite platine (10), commandés et configurés pour générer une dépression dans ledit espace clos (5) de sorte à fixer ladite platine (10) à ladite surface de support (3),

Selon la présente divulgation, ladite platine (10) comprend en outre, sur sa deuxième surface (12), au moins une zone d'appui (6) mettant en contact ladite platine (10) avec ladite surface de support (3).

## Description

### Domaine de la divulgation

Le domaine de la divulgation est celui de la réparation de carrosserie automobile, et plus particulièrement les dispositifs destinés à redresser et à remettre en forme les carrosseries de véhicule qui ont été déformées suite à un choc ou un accident par exemple

Plus particulièrement encore, la divulgation concerne les dispositifs de tirage ou dispositifs de traction.

### Art antérieur

On connaît les dispositifs de redressage manuels permettant la réparation de déformations de carrosserie automobile et qui comprennent un montant sensiblement vertical qui peut être monté pivotant sur une base, ou platine, en contact avec le sol. Cette platine présente un joint d'étanchéité, par exemple en caoutchouc, qui s'étend sur l'ensemble de la périphérie de la platine de sorte à créer un espace clos et étanche entre la platine du dispositif et le sol sur lequel il repose.

Une pompe, par exemple du type Venturi, est reliée à cet espace clos et aspire l'air sous la platine de sorte à créer un vide permettant de maintenir la platine en position sur le sol grâce à la différence de pression créée par la pompe.

Selon cette technique, la platine est sensiblement plane et le joint d'étanchéité est collé sur la périphérie de la platine.

Un inconvénient de cette technique réside dans le fait que le joint s'use rapidement et que son maintien en position n'est pas satisfaisant. En effet lors du tirage, des efforts (notamment de cisaillement) ont lieu sur le joint, ce qui conduit à sa déformation et parfois même à son décollement de la platine, ce qui n'est pas satisfaisant.

Un autre inconvénient réside dans le fait que le joint doit donc être remplacé régulièrement afin de s'assurer que le dispositif de tirage puisse être utilisé de manière sûre.

Or, le changement/remplacement du joint n'est pas aisé du fait qu'il soit collé. En effet, le remplacement du joint nécessite l'utilisation d'outils et de produits chimiques parfois nocifs pour enlever les résidus de colle et de joint présent sur la platine avant de pouvoir coller un nouveau joint sur cette dernière.

De plus, afin que le collage soit efficace, il est indispensable que la platine soit parfaitement débarrassée des résidus afin d'assurer un bon collage du joint et une bonne étanchéité de l'espace clos situé entre la platine du dispositif et le sol sur lequel il repose. Ainsi, l'opération de remplacement d'un joint selon cette technique connue est relativement difficile et chronophage, ce qui n'est pas non plus satisfaisant.

### Résumé de la divulgation

L'invention a été conçue en conservant ces inconvénients de l'art antérieur à l'esprit. L'invention se rapporte plus particulièrement à un dispositif de tirage, par exemple portatif ou mobile, destiné à porter au moins un outil de tirage adapté pour redresser des tôles, ledit dispositif comprenant :
- une platine adaptée pour être fixée de manière amovible sur une surface de support,
- une colonne de tirage configurée pour porter ledit outil de tirage, ladite colonne de tirage étant solidaire d'une première surface dite surface supérieure, de ladite platine,
- des moyens d'étanchéité élastiques s'étendant sur la périphérie d'une deuxième surface, dite surface inférieure, de ladite platine, lesdits moyens d'étanchéité élastiques étant configurés, lors de l'utilisation dudit dispositif pour être disposés entre la platine et la surface de support pour former un espace clos, et
- des moyens de génération de vide, en communication fluidique avec l'espace clos au niveau d'un orifice de ladite platine, commandés et configurés pour générer une dépression dans ledit espace clos de sorte à fixer ladite platine à ladite surface de support.

Selon la présente divulgation, ladite platine comprend en outre, sur sa deuxième surface, au moins une zone d'appui mettant en contact ladite platine avec ladite surface de support.

Ainsi, la mise en oeuvre d'une telle zone d'appui permet d'éviter que les efforts engendrés sur la platine lors de l'utilisation du dispositif de tirage soit directement subis par les moyens d'étanchéité. De cette manière, c'est la zone d'appui qui absorbe ces efforts pour protéger les moyens d'étanchéité afin de limiter leur usure et ainsi augmenter leur durée de vie.

Par ailleurs, cette approche permet, lors de l'utilisation du dispositif de tirage, d'appliquer des efforts de traction ou de tirage à la carrosserie à réparer qui sont beaucoup plus importants qu'avec les dispositifs de tirage de l'art antérieur.

Selon un aspect particulier, ladite platine présente une forme sensiblement en quadrilatère et en ce que ladite platine comprend quatre zones d'appui disposées sensiblement au niveau des quatre coins de ladite platine.

Ainsi, la mise en oeuvre de quatre zones d'appui, situées aux quatre coins de la platine permet d'assurer une absorption optimale des efforts engendrés lors de l'utilisation du dispositif. Notamment, les efforts de cisaillements sont parfaitement absorbés par cette disposition particulière des zones d'appui. De plus, cette disposition permet d'assurer une stabilité optimale de la platine sur la surface de support.

Selon un autre aspect particulier, ladite au moins une zone d'appui se présente sous la forme d'un patin fabriqué dans un matériau adhérent.

Ainsi, le maintien en position de la platine sur la surface de support est amélioré et les risques de déplacements non souhaités de la platine par rapport à la surface de support lors de l'utilisation du dispositif de tirage sont limités, voire supprimés.

Selon encore un autre aspect particulier, ladite au moins une zone d'appui est fabriquée en caoutchouc, en élastomère, en polymère ou en thermoplastique.

De tels matériaux sont simples à mettre en oeuvre et peu coûteux tout en permettant d'assurer une adhérence et une absorption des efforts optimales. La durée de vie de patins fabriqués dans de tels matériaux est en outre relativement élevée et adaptée à un tel usage.

Selon un autre aspect particulier, ladite au moins une zone d'appui est fixée de manière amovible sur ladite deuxième surface de ladite platine.

Ainsi, il est possible de remplacer de manière rapide et aisé les zones d'appui, par exemple en cas d'usure avancée ou de dégradation accidentelle de ces moyens.

Selon un autre aspect particulier, ladite au moins une zone d'appui est fixée par vissage. Une telle solution de fixation est simple et rapide à mettre en oeuvre.

Selon un aspect particulier, ladite platine comprend au moins une rainure de réception desdits moyens d'étanchéité élastiques.

Selon un autre aspect particulier, lesdits moyens d'étanchéité élastiques sont fixés de manière amovible dans ladite au moins une rainure.

On entend ici par amovible le fait que les moyens d'étanchéité peuvent être retirés de la rainure sans dégrader ces derniers, ce qui n'est pas le cas de la solution de l'art antérieur qui consiste à retirer le joint d'étanchéité collé par tous moyens, à l'aide d'outils et/ou de produits chimiques.

Grâce à la mise en oeuvre de cette rainure, les moyens d'étanchéité peuvent par exemple être solidarisés à force, par emboitement ou encastrement dans la rainure. Il est ainsi possible de remplacer de manière rapide et aisé les moyens d'étanchéité élastiques, par exemple en cas d'usure avancée ou de dégradation accidentelle de ces moyens. De plus, cette rainure permet un remplacement des moyens d'étanchéité élastiques ne nécessitant aucun outil ou produit chimique. La mise en oeuvre de cette rainure permet en outre d'assurer un positionnement optimal et fiable des moyens d'étanchéité élastiques sous la platine pour assurer un fonctionnement optimal du dispositif.

Selon un aspect particulier, lesdits moyens d'étanchéité élastiques se présentent sous la forme d'un joint d'étanchéité s'étendant sur l'ensemble de la périphérie de ladite deuxième surface de ladite platine. Un tel joint est peu coûteux et simple à mettre en oeuvre.

Selon un autre aspect particulier, ledit joint d'étanchéité est fabriqué en polymère, et plus précisément en Éthylène Propylène Diène-Monomère (« EPDM »).

Un tel matériau est peu coûteux et permet d'assurer une étanchéité optimale de l'espace clos. La durée de vie d'un joint d'étanchéité fabriqué dans un tel matériau est en outre relativement élevée et adaptée à un tel usage.

### Liste des Figures

La divulgation, ainsi que les différents avantages qu'elle présente, seront plus facilement compris, à la lumière de la description qui va suivre d'un mode de réalisation illustratif et non limitatif de celle-ci, et des dessins annexés parmi lesquels :
- [Fig 1] est une vue schématique partielle, vue de côté, d'un dispositif de tirage selon la divulgation ;
- [Fig 2] est une vue de dessous d'une platine du dispositif de la figure 1 ;
- [Fig 3] est une vue en perspective et de dessous de la platine de la figure 2 ; et
- [Fig 4] est une vue en coupe et de côté de la platine de la figure 2.

### Description détaillée

Le principe général de l'invention repose sur la mise en oeuvre d'au moins une zone d'appui sur la surface inférieure de la platine d'un dispositif de tirage de sorte à ce que les efforts (notamment de cisaillement) engendrés lors de l'utilisation du dispositif ne soient plus appliqués sur le joint d'étanchéité (ou tout autre moyen d'étanchéité mis en oeuvre) de la platine mais sur la ou les zones d'appui.

Ainsi, le joint d'étanchéité n'est plus sous contrainte lors de l'utilisation du dispositif de tirage.

Le joint d'étanchéité est alors utilisé uniquement pour assurer l'étanchéité et donc la création d'une dépression entre la platine du dispositif de tirage et la surface de support (généralement le sol). De cette manière, la durée de vie du joint d'étanchéité est prolongée de manière importante.

De plus, du fait que le joint d'étanchéité n'est plus contraint par les efforts engendrés lors de l'utilisation du dispositif de tirage, une nouvelle solution de fixation du joint d'étanchéité peut être mise en oeuvre.

Cette solution consiste à ménager une rainure sur la surface inférieure de la platine et à fixer le joint d'étanchéité dans cette rainure, et tout cela sans nécessiter d'outil ou de produit chimique. De cette manière, l'installation et le remplacement du joint d'étanchéité sont facilités.

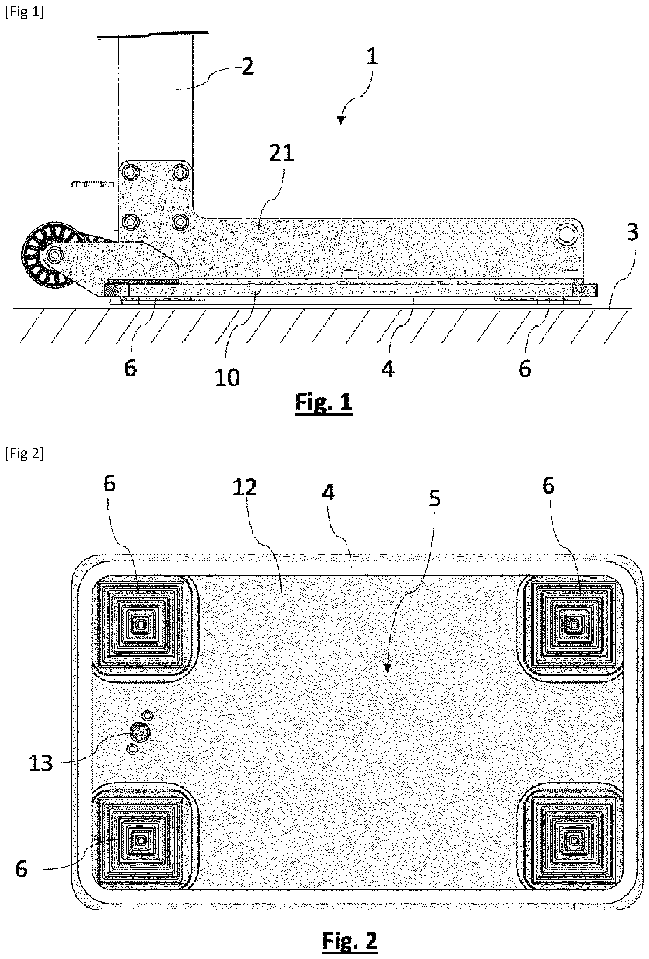

La **figure 1** illustre partiellement un dispositif 1 de tirage, ou de traction, destiné à redresser des tôles, par exemples pour le domaine de la carrosserie automobile. Un tel dispositif 1 de tirage est apte à porter au moins un outil de tirage coopérant avec un ou plusieurs éléments de tirage correspondant fixé sur la tôle à redresser.

Comme illustré, le dispositif 1 de tirage comprend une platine 10 adaptée pour être fixée de manière amovible sur une surface de support 3 (par exemple le sol de l'atelier). Le dispositif 1 de tirage comprend en outre une colonne de tirage 2 configurée pour porter le ou les outils de tirage. La colonne de tirage 2 est solidaire d'une première surface 11, dite surface supérieure, de la platine 10. Dans l'exemple illustré, la colonne de tirage 2 est solidarisée à la platine 10 via un élément de support 21 présentant une forme sensiblement en « L », mais d'autres solutions sont envisageables. La solidarisation de la colonne de tirage 2 et de la platine 10 sur l'élément de support 21 peut par exemple être effectuée par vissage ou tout autre solution permettant d'obtenir une fixation fiable des éléments entre eux.

Le dispositif 1 de tirage peut être portatif, ou mobile, de sorte à pouvoir être déplacé dans un atelier, par exemple.

Dans tous les cas, la platine 10 peut être fixée sur la surface de support 3 par succion, c'est-à-dire par la création d'une dépression, ou autrement dit d'un vide, entre la platine 10 et la surface de support 3.

En ce sens, et comme illustré sur la **figure 2****,** la platine 10 comprend des moyens d'étanchéité élastiques 4 s'étendant sur la périphérie d'une deuxième surface 12, dite surface inférieure, de la platine 10.

Dans cet exemple, les moyens d'étanchéité élastiques 4 se présentent sous la forme d'un joint d'étanchéité. Ce joint d'étanchéité 4 est configuré, lors de l'utilisation du dispositif 1 de tirage, pour être disposé entre la platine 10 et la surface de support 3 pour former un espace clos 5 étanche.

Des moyens de génération de vide (non illustrés) sont reliés en communication fluidique avec l'espace clos 5 au niveau d'un orifice 13 ménagé dans la platine 10.

Ces moyens de génération de vide, se présentant par exemple sous la forme d'une pompe à air, peuvent être commandés de sorte à générer une dépression dans l'espace clos 5. Ainsi, la commande des moyens de génération de vide permet à l'utilisateur de fixer la platine 10 à la surface de support 3 lors de l'utilisation du dispositif 1 de tirage et de libérer la platine 10 de la surface de support 3 lorsque le dispositif 1 de tirage doit être déplacé, par exemple.

De façon avantageuse, la surface inférieure 12 de la platine 10 comprend au moins une zone d'appui 6 disposée au sein de l'espace clos 5, c'est-à-dire dans l'espace délimité par le joint d'étanchéité 4. Une telle zone d'appui 6 est configurée pour venir en contact avec la surface de support 3 de sorte à absorber les efforts, notamment de cisaillement, qui sont engendrés lorsque le dispositif 1 de tirage est en utilisation.

De cette manière, le joint d'étanchéité 4 ne subit plus aucun effort mécanique et son seul rôle est d'assurer l'étanchéité de l'espace clos 5.

Ainsi, le joint d'étanchéité 4 est protégé de toute détérioration prématurée, ce qui permet d'augmenter sa capacité à maintenir le vide et sa durée de vie. La mise en oeuvre de zones d'appui 6 permet en outre l'application d'un effort de traction plus important que dans les solutions de l'art antérieur puisque ce n'est plus le joint d'étanchéité 4 qui subit ces efforts.

En effet, la ou les zones d'appui sont configurées pour absorber des efforts bien plus importants qu'un joint d'étanchéité 4 souple.

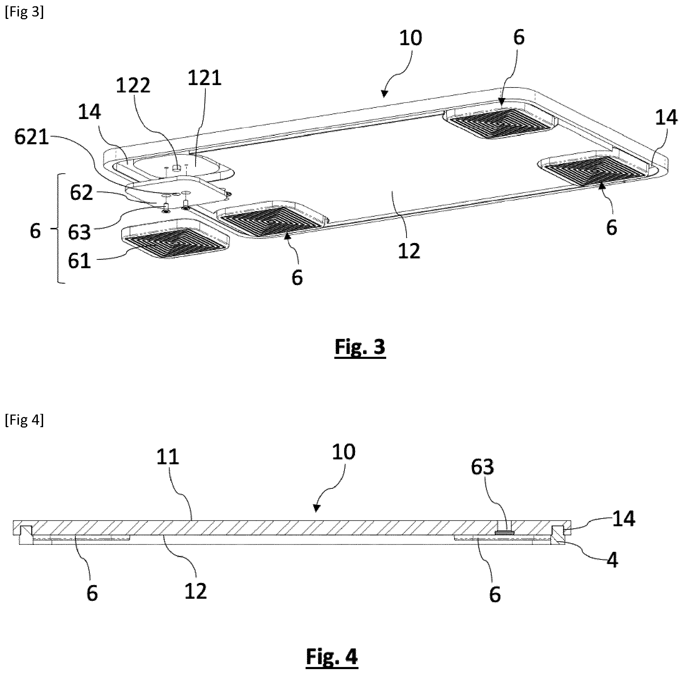

De préférence, et comme illustré sur les **figures 2** et **3****,** la platine 10 présente une forme sensiblement rectangulaire. Des zones d'appui 6 sont disposées aux quatre coins de la platine 10. Ainsi, le dispositif 1 de tirage comprend quatre zones d'appui 6 qui permettent d'absorber de manière optimale les efforts subis par la platine 10 lors de l'utilisation du dispositif 1 de tirage. De plus, la mise en oeuvre de quatre zones d'appui 6 disposées de cette manière permet d'assurer un équilibre et une stabilité optimaux du dispositif 1 de tirage.

Dans des variantes non illustrées, on pourrait envisager de mettre en oeuvre plus ou moins de zones d'appui 6 sous la platine 10, sans s'écarter du principe général de l'invention.

Néanmoins, la mise en oeuvre de quatre zones d'appui 6 permet d'obtenir un compromis optimal d'absorption des efforts et de force de succion pour assurer un maintien en position efficace du dispositif 1 de tirage lors de son utilisation.

Dans l'exemple illustré, les zones d'appui 6 se présentent sous la forme de patins souples, de préférence fabriqués en caoutchouc souple.

Ces patins 6 présentent une forme sensiblement carrée ou rectangulaire et présentent une adhérence élevée permettant d'assurer le maintien en position du dispositif 1 de tirage sur la surface de support 3. De préférence, la forme des patins 6 est sélectionnée pour correspondre à la forme de la platine et/ou au cheminement du joint d'étanchéité 4 sous la platine 10.

Ainsi, dans cet exemple, les angles ou coins des patins sont arrondis pour correspondre au cheminement du joint d'étanchéité 4.

Il est à noter que, comme illustré sur la **figure 2****,** les patins 6 et le joint d'étanchéité 4 sont disposés de manière rapprochée, notamment au niveau des angles ou coins de la platine 10 afin d'assurer une étanchéité optimale de l'espace clos 5. Cette disposition permet également de s'assurer que ce sont bien les patins 6 qui absorbent les efforts lors de l'utilisation du dispositif 1 de tirage.

Les patins 6 doivent présenter des dimensions suffisantes pour assurer une absorption optimale des efforts lors de l'utilisation du dispositif 1. Ces dimensions sont également sélectionnées en fonction de celles de la platine 10 et/ou de l'espace clos 5 afin d'assurer une fixation optimale de la platine sur la surface de support 3.

Comme illustré sur la **figure 3****,** les patins 6 sont, dans cet exemple, amovibles de sorte à permettre un retrait et/ou un remplacement aisé de ces derniers, par exemple en cas d'usure.

Dans cet exemple, chaque patin 6 comprend un coussin 61 coopérant avec une embase de support 62 destiné à être fixée sur la surface inférieure 12 de la platine 10. Plus précisément, la platine 10 comprend des évidements, ou des poches, 121 de réception des patins 6.

Dans cet exemple, les embases de support 62 sont fixées à la platine 10 par des vis de fixation 63.

On comprend que d'autres solutions de fixation amovibles peuvent être envisagées sans s'écarter du principe de l'invention.

On note que sur l'exemple de la **figure 3****,** la poche de réception 121 présente en outre un pion de centrage 122 coopérant avec une lumière de centrage 621 correspondante ménagée dans l'embase de support 62.

De préférence, la platine 10 du dispositif 1 de tirage comprend au moins une rainure 14 de réception des moyens d'étanchéité 4.

Dans l'exemple illustré sur les **figures 2** à **4****,** la platine 10 comprend une unique rainure 14 s'étendant sur l'ensemble de la périphérie de la surface inférieure 12 de la platine 10.

Cette rainure 14 est configurée pour recevoir et maintenir le joint d'étanchéité 4.

Pour ce faire, la rainure 14 présente dans cet exemple une section sensiblement carrée ou rectangulaire, comme illustrée en détail sur la vue en coupe de la **figure 4****.** Le joint d'étanchéité 4 présente une section de forme correspondante.

De préférence, le joint d'étanchéité 4 présente des dimensions supérieures à la rainure 14 de sorte à ce qu'il puisse être emmanché ou emboité à force dans la rainure 14.

Ainsi, aucun outil ni produit chimique n'est nécessaire pour installer le joint d'étanchéité 4 dans la rainure 4 et/ou le retirer.

Plus précisément, le joint d'étanchéité 4 présente une souplesse ou une élasticité qui permet à ce dernier de se compresser lors de son installation dans la rainure 14. Ensuite, son expansion naturelle permet d'assurer un maintien optimal du joint d'étanchéité 4 dans la rainure 14. Le retrait du joint d'étanchéité 4 reste toutefois simple puisqu'il ne nécessite aucun outil ni produit chimique.

La rainure 14 permet donc de ne plus avoir à coller le joint d'étanchéité 4 sur la platine 10, contrairement aux solutions de l'art antérieur.

Cette solution de fixation du joint d'étanchéité 4 dans la rainure 14 est également rendu possible grâce à la mise en oeuvre des zones d'appui 6 qui permettent d'absorber les efforts lors de l'utilisation du dispositif 1 de tirage, au lieu que ce soit le joint d'étanchéité 4 qui ait à absorber ces efforts.

On comprend bien évidemment que l'épaisseur du joint d'étanchéité 4, l'épaisseur des patins 6 et la profondeur des poches de réception 121 sont sélectionnées pour que les patins 6 soient en contact avec la surface de support 3 lorsque le vide est fait au sein de l'espace clos 5 de sorte que ce soit les patins 6 qui absorbent les efforts de cisaillement plutôt que le joint d'étanchéité 4.

On comprend également que la forme de la platine 10 peut différer de la forme rectangulaire illustrée dans cet exemple.

La platine 10 peut présenter toute autre forme et les zones d'appui 6 peuvent être disposées différemment tant que les avantages cités précédemment en relation avec ces éléments sont conservés.

Par exemple, la platine 10 peut présenter une forme de quadrilatère et présenter une zone d'appui au niveau de chaque coin/angle.

La platine 10 est de préférence fabriquée en métal afin d'assurer une résistance suffisante aux efforts subis lors de l'utilisation du dispositif 1 de tirage.

Notamment, la platine peut être fabriquée en acier afin de limiter les coûts de fabrication. De préférence, la platine 10 est fabriquée en aluminium, par exemple en aluminium 5083 ou en aluminium 2017, afin de limiter le poids du dispositif 1 et donc faciliter son déplacement.

De plus, l'utilisation de l'aluminium permet de faciliter l'usinage de l'orifice 13 et des poches de réception 121 des patins 6, notamment.

La platine 10 présente, par exemple, une longueur d'environ 60 cm pour une largeur d'environ 40 cm. La surface de l'espace clos 5 situé sous la platine 10 entre le joint d'étanchéité 4 est par exemple d'environ 0,181 m².

On comprend bien évidemment que d'autres dimensions peuvent être envisagées, notamment en fonction des besoins et des forces de tirage à exercer, sans s'écarter du principe général décrit précédemment.

Le joint d'étanchéité 4 est de préférence fabriqué en polymère, et plus précisément en Éthylène Propylène Diène-Monomère (« EPDM »).

D'autres matériaux permettant d'assurer une étanchéité optimale de l'espace clos 5 tout en permettant une installation et un retrait sans outil du joint d'étanchéité 4 de la rainure 14 peuvent être envisagés sans s'écarter du principe de l'invention.

Par exemple, le joint d'étanchéité 4 présente une épaisseur comprise entre environ 1 et 2 cm, et de préférence de 1,5 cm. Sa largeur peut par exemple être comprise entre 1,5 et 2,5 cm, et de préférence de 2 cm. D'autres dimensions, peuvent être envisagées, notamment en fonction des dimensions de la platine par exemple, sans s'écarter du principe général décrit précédemment.

L'exemple illustré présente une rainure 14 ayant une forme carrée ou rectangulaire. On comprend que d'autres formes peuvent être envisagées tant qu'elles permettent une installation et un retrait sans outil du joint d'étanchéité 4 dans la rainure 14.

Le joint d'étanchéité 4 peut également présenter toute forme lui permettant de fournir les avantages précités.

Les patins 6 sont de préférence fabriqués en caoutchouc afin d'assurer une adhérence et une absorption optimales des efforts, notamment de cisaillement.

D'autres matériaux, tel que les thermoplastiques ou les élastomères, peuvent être envisagés sans s'écarter du principe de l'invention.

De préférence encore, les patins 6 sont fabriqués en TPE ou en TPR 65 Shore A. Ils peuvent par exemple présenter une forme sensiblement carrée de 10 cm par 10 cm.

D'autres dimensions et formes peuvent être envisagées sans s'écarter du principe général décrit ci-dessus.

## Revendications

1. Dispositif (1) de tirage destiné à porter au moins un outil de tirage adapté pour redresser des tôles, ledit dispositif (1) comprenant :
- une platine (10), adaptée pour être fixée de manière amovible sur une surface de support (3),
- une colonne de tirage (2) configurée pour porter ledit outil de tirage, ladite colonne de tirage étant solidaire d'une première surface (11), dite surface supérieure, de ladite platine (10),
- des moyens d'étanchéité élastiques (4) s'étendant sur la périphérie d'une deuxième surface (12), dite surface inférieure, de ladite platine (10), lesdits moyens d'étanchéité élastiques (4) étant configurés, lors de l'utilisation dudit dispositif (1), pour être disposés entre la platine (10) et la surface de support (3) pour former un espace clos (5), et
- des moyens de génération de vide, en communication fluidique avec l'espace clos (5) au niveau d'un orifice (13) de ladite platine (10), commandés et configurés pour générer une dépression dans ledit espace clos (5) de sorte à fixer ladite platine (10) à ladite surface de support (3),
**caractérisé en ce que** ladite platine (10) comprend en outre, sur sa deuxième surface (12), au moins une zone d'appui (6) mettant en contact ladite platine (10) avec ladite surface de support (3).

2. Dispositif (1) de tirage selon la revendication 1, **caractérisé en ce que** ladite platine (10) présente une forme sensiblement en quadrilatère et **en ce que** ladite platine (10) comprend quatre zones d'appui disposées sensiblement au niveau des quatre coins de ladite platine (10).

3. Dispositif (1) de tirage selon la revendication 1 ou 2, **caractérisé en ce que** ladite au moins une zone d'appui (6) se présente sous la forme d'un patin fabriqué dans un matériau adhérent.

4. Dispositif (1) de tirage selon la revendication 3, **caractérisé en ce que** ladite au moins une zone d'appui (6) est fabriquée caoutchouc, en élastomère, en polymère ou en thermoplastique.

5. Dispositif (1) de tirage selon l'une des revendications 1 à 4, caractérisé en ce ladite au moins une zone d'appui (6) est fixée de manière amovible sur ladite deuxième surface (12) de ladite platine (10).

6. Dispositif (1) de tirage selon la revendication 5, caractérisé en ce ladite au moins une zone d'appui (6) est fixée par vissage.

7. Dispositif (1) de tirage selon l'une des revendications 1 à 6, **caractérisé en ce que** ladite platine (10) comprend au moins une rainure (14) de réception desdits moyens d'étanchéité élastiques (4).

8. Dispositif (1) de tirage selon la revendication 7, **caractérisé en ce que** lesdits moyens d'étanchéité élastiques (4) sont fixés de manière amovible dans ladite au moins une rainure (14).

9. Dispositif (1) de tirage selon l'une des revendications 1 à 8, **caractérisé en ce que** lesdits moyens d'étanchéité élastiques (4) se présentent sous la forme d'un joint d'étanchéité s'étendant sur l'ensemble de la périphérie de ladite deuxième surface (12) de ladite platine (10).

10. Dispositif (1) de tirage selon la revendication 9, **caractérisé en ce que** ledit joint d'étanchéité (4) est fabriqué en polymère, et plus précisément en Éthylène Propylène Diène-Monomère (« EPDM »).
